(19) Europäisches Patentamt

European Patent Office

Office européen des brevets

(11) EP 1 688 644 A1

(12) **EUROPÄISCHE PATENTANMELDUNG**

(43) Veröffentlichungstag:
09.08.2006 Patentblatt 2006/32

(51) Int Cl.:
*F16H 21/46* (2006.01)   *B01F 11/00* (2006.01)

(21) Anmeldenummer: 06405048.7

(22) Anmeldetag: 01.02.2006

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 07.02.2005  CH 1852005

(71) Anmelder: Fondovalle GmbH
8636 Wald ZH (CH)

(72) Erfinder: Salgo, Reinhold C.
8635 Dürnten (CH)

(74) Vertreter: Salgo, Reinhold Caspar
Dr. R.C. Salgo + Partner,
Patentanwälte AG,
Rütistrasse 103
8636 Wald ZH (CH)

(54) **Antrieb für inversionskinematische Vorrichtung**

(57) Ein Antrieb für inversionskinematische Vorrichtungen (9) weist zwei Kreuzgelenke (13, 14) mit einem Beugungswinkel $\beta$ von 45° auf. Die Antriebseinheiten (10) liefern über die Antriebsachsen (11, 12) eine gleichförmige Drehbewegung, welche durch die gebeugten Kreuzgelenke (13, 14) in eine ungleichförmige Drehung der Achsen (3, 4) der inversionskinematischen Vorrichtung (9) umgewandelt wird.

Fig. 3

**Beschreibung**

Die vorliegende Erfindung betrifft einen Antrieb für eine inversionskinematische Vorrichtung nach dem Oberbegriff des Patentanspruches 1.

Inversionskinematische Vorrichtungen sind diverse bekannt und gehen in der Regel zurück auf Paul Schatz (1898-1979) entweder direkt als Erfinder oder mittelbar auf ihn als Begründer der Inversionskinematik (siehe auch: Paul Schatz, Rhythmusforschung und Technik, Stuttgart 1998, ISBN 3-7725-0649-6).

Solche Vorrichtungen eignen sich beispielsweise besonders zur homogenen Mischung von Stoffen. Eine Möglichkeit dreigliedrige inversionskinematische Gelenkketten für Mischung zu benutzen, besteht darin, das Mittelglied so zu modifizieren, dass es einen Hohlkörper, beispielsweise eine Dose oder ein Fass, aufnehmen kann, in welchem wiederum die zu mischenden Stoffe enthalten sind. Eine weitere Möglichkeit besteht darin, das Mittelglied durch einen geeignet geformten Körper, beispielsweise ein Oloid, zu ersetzen, und die inversionskinematische Vorrichtung in die zu mischende Flüssigkeit einzutauchen. Dabei wird durch die rhythmisch paddelnde Inversionsbewegung des Oloids in der Flüssigkeit eine gerichtete Strömung erzeugt.

Antriebe für inversionskinematische Vorrichtungen mit zwei parallelen, gegenläufigen Achsen sind bekannt, so z.B. EP 99 920 531 (D1) und DE1145455 (D2), das den nächstliegenden Stand der Technik bildet.

Die Drehwinkelbeziehung dieser gegenläufig drehenden parallelen Achsen lautet in der Regel:

$$\tan \varphi_1 \ = \ \frac{1}{2} \tan \varphi_2 \qquad\qquad (1)$$

und deren ungleichförmige Winkelgeschwindigkeiten gehorchen daher der Beziehung:

$$\frac{\omega_1}{\omega_2} \ = \ 2 \ \frac{1 + \frac{1}{4} \tan^2 \varphi_1}{1 + \tan^2 \varphi_1} \qquad\qquad (2)$$

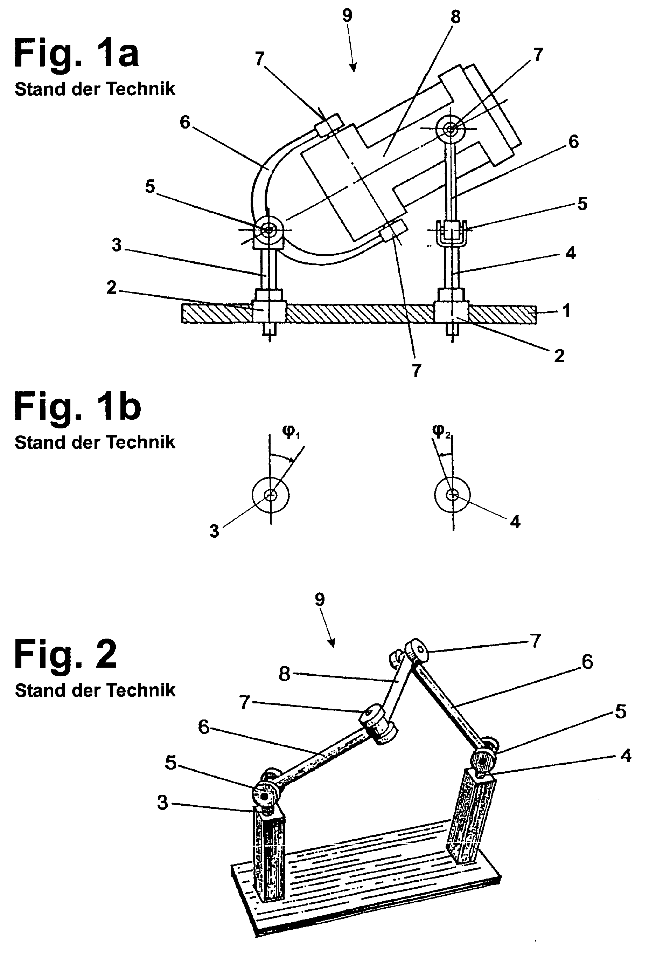

Bei den obigen Beziehungen steht die Bezugsrichtung $\varphi_1 = \varphi_2 = 0$ senkrecht auf der Verbindungsgeraden der zwei Achsen; da die Drehachsen, wie gesagt, gegenläufig drehen, ist die positive Drehrichtung für $\varphi_1$ derjenigen von $\varphi_2$ entgegengesetzt (Fig. 1b).

Das Problem dieser Antriebe ist, dass die Achsen ungleichförmig angetrieben werden müssen. Die gleichförmige Bewegung, beispielsweise eines Elektromotors, muss so umgewandelt werden, dass die beiden Achsen der inversionskinematischen Vorrichtung gemäss der Gleichung 1 angetrieben werden.

Die bekannten Antriebslösungen sind technisch aufwändig, pannenanfällig, ineffizient und/oder teuer.

Die Aufgabe der vorliegenden Erfindung besteht in der Schaffung eines Antriebs für inversionskinematische Vorrichtungen, welcher wartungsarm, effizient und kostengünstig ist.

Die Lösung der Aufgabe ist wiedergegeben im kennzeichnenden Teil des Anspruches 1 hinsichtlich ihrer wesentlichen Merkmale, in den folgenden Ansprüchen hinsichtlich weiterer vorteilhafter Ausbildungen.

Anhand der beigefügten Zeichnungen wird der Erfindungsgegenstand mittels mehrerer Ausführungsbeispiele näher erläutert.

Es zeigen

Fig. 1a, b    eine inversionskinematische Vorrichtung mit einem Mischbehälter in der Gelenkkette gemäss dem Stand der Technik im Aufriss und im Querschnitt,

Fig. 2    eine schematische Darstellung einer inversionskinematischen Gelenkkette nach dem Stand der Technik als Isometrie,

Fig. 3    eine schematische Darstellung eines ersten Ausführungsbeispieles eines Antriebes für eine inversionskinematische Vorrichtung in Seitenansicht,

Fig. 4    eine schematische Darstellung eines zweiten Ausführungsbeispieles eines Antriebes für eine inversionskinematische Vorrichtung in Seitenansicht.

Die Analyse der Kinematik einer halben Gelenkkette nach Bricard ergibt folgendes:

Die Winkelbeziehung der Gleichung 1 kann technisch erzeugt werden, indem die beiden Achsen 3, 4 von gleichförmig drehenden Achsen über zwei um 45° abgewinkelte Kreuzgelenke angetrieben werden.

Dies kann mit Hilfe der Kreuzgelenkgleichung

$$\alpha_2 = \arctan\left(\frac{1}{\cos\beta} \cdot \tan\alpha_1\right) \qquad (3)$$

(wobei gilt $\alpha_2$, $\alpha_1$: Drehwinkel der Kreuzgelenkachsen, $\beta$: Beugungswinkel des Kreuzgelenkes) in Verbindung mit Gleichung 1 gezeigt werden.

Die Winkelbeziehung zwischen einer gleichförmig umlaufenden Antriebsachse und einer Achse 3, 4 der inversionskinematischen Vorrichtung lautet daher folgendermassen:

$$\tan\varphi_1 = \frac{1}{\cos 45°}\tan\alpha_1 = \frac{1}{\sqrt{1/2}}\tan\alpha_1 \qquad (4)$$

(wobei gilt ($\alpha_1$: Drehwinkel der gleichförmig rotierenden Antriebsachse, $\varphi_1$ : Drehwinkel einer Achse 3, 4 der inversionskinematischen Vorrichtung). In der Regel wird die Drehzahl eines gleichförmig rotierenden Antriebsmotors mittels eines Getriebes untersetzt, wenn die inversionskinematische Vorrichtung mit niedrigerer Drehzahl betrieben werden soll als der vom Antriebsmotor gelieferten.

Die Figuren 1a,b und 2 illustrieren den Stand der Technik bezüglich inversionskinematischer Vorrichtungen 9.

Fig. la zeigt den Aufriss einer inversionskinematischen Innenmischmaschine. Eine Grundplatte 1 trägt, in je einem Hauptlager 2 drehbar gelagert, zwei Achsen 3, 4. Diese sind parallel zueinander und gegenläufig bewegt. Dreht Achse 3 um den Winkel $\varphi_1$, so ist der Winkel der Achse 4 $\varphi_2$; die Beziehung der Winkel ist in Gleichung 1 definiert.

Siehe dazu Fig. 1b, welche einen Schnitt durch die Achsen 3, 4 darstellt.

Aus Gleichung 1 geht zudem hervor, dass immer bei den Divergenzwerten des $\tan\varphi_1$ auch $\tan\varphi_2$ divergiert oder, dass nach einer Drehung von n·90° von Achse 3 auch Achse 4 sich um n·90° gedreht hat, wo n = 1,2,3,4....

Fig. 2 zeigt eine perspektivische Darstellung einer inversionskinematischen Vorrichtung 9 - einer einfachen Gelenkkette - die nun im Vergleich mit Fig. 1a beschrieben wird. Jede Achse 3, 4 trägt an ihrem Ende ein Gelenk 5, dessen Drehachse senkrecht steht auf der Richtung der Achse 3, 4; in den Stellungen $\tan\varphi_1 = \tan\varphi_2$ stehen zudem die Achsen der Gelenke 5 senkrecht aufeinander. In Fig. 2 schliesst sich an das Gelenk 5 je eine Stange 6, welche an ihrem Ende wiederum ein Gelenk 7 aufweist, dessen Achse erneut senkrecht steht auf jener des Gelenkes 5. Verbunden sind die Gelenke 7 durch eine weitere Stange, die hier Mittelglied 8 genannt wird.

Betrachtet man nun Fig. 1a, so ist dort jede Stange 6 von Fig. 2 durch eine Gabel 6 ersetzt, allgemein und im Folgenden Randglied 6 genannt. Das Mittelglied 8 wird hier durch ein rohrartiges Element ersetzt, welches zur Aufnahme eines Behälters eingerichtet ist. Die mit 5, 6, 7, 8 bezeichneten Elemente bilden die Hälfte einer Gelenkkette nach Bricard (1897) oder einen halben Würfelgürtel nach Paul Schatz. Die instrumentellen Ausbildungen dieser Gelenkkette sind mannigfaltig und bekannt.

Wegen der ungleichförmigen Charakteristik der beiden Winkelgeschwindigkeiten $\omega_1$, $\omega_2$ der Achsen 3, 4 fällt ein direkter motorischer Antrieb praktisch ausser Betracht, es sei denn es würden teure Stellmotoren verwendet, welche entsprechend der benötigten Kinematik programmiert werden.

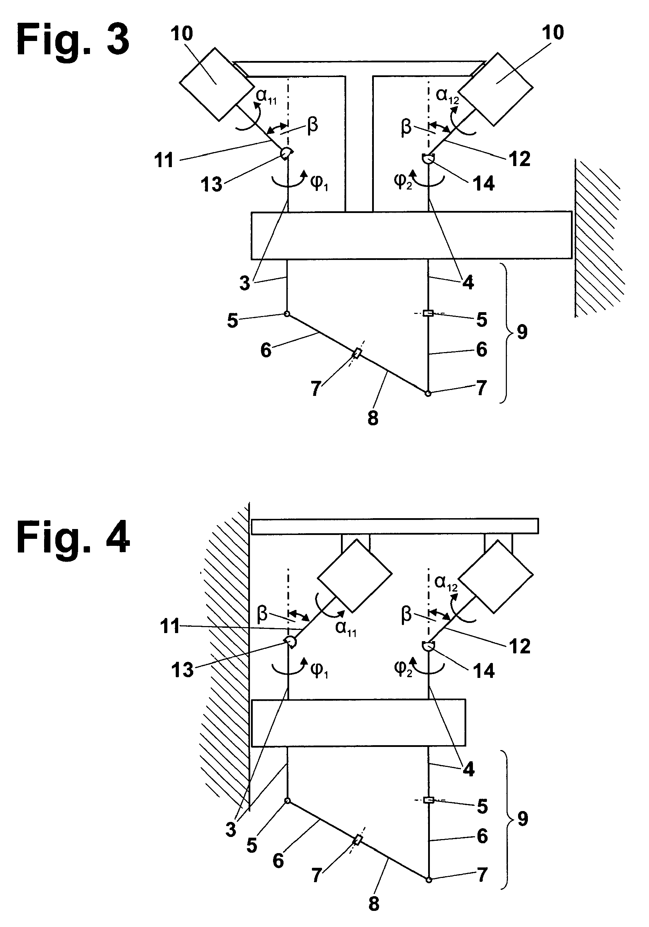

Die Fig. 3 zeigt ein erstes Ausführungsbeispiel eines erfindungsgemässen Antriebes. Erfindungsgemäss wird jede Achse 3, 4 von je einer gleichförmig drehende Bewegung erzeugenden Antriebseinheit 10 über Antriebsachsen 11, 12 und um 45° abgewinkelte Kreuzgelenke 13, 14 angetrieben. Damit diese Anordnung Bewegungen gemäss der Drehwinkelbeziehung in Gleichung 1 erzeugt, müssen die Gabeln der Kreuzgelenke 13, 14 zueinander um 90° verdreht sein, und die Antriebsachsen 11, 12 liegen in derselben Ebene wie die Achsen 3, 4.

Fig. 4 zeigt ein zweites Ausführungsbeispiel mit parallelen Antriebsachsen 11, 12. In Fig. 3 stehen die Achsen 11, 12 orthogonal aufeinander.

Eine Antriebseinheit 10 besteht beispielsweise aus einem günstigen Asynchron-Elektromotor mit einem nachgeschalteten Untersetzungsgetriebe. Es können jedoch auch andere, gleichförmige Drehbewegungen erzeugende Motoren verwendet werden. Die Motoren weisen idealerweise eine gewisse Elastizität auf.

In D2 werden beide Antriebsachsen von einer einzigen Antriebseinheit angetrieben. Die Verteilung auf die zwei Achsen erfolgt über ein Getriebe in Form von Kegelzahnrädern. Die beiden Achsen sind nicht nur über die Gelenkkette sondern auch über den Antrieb formschlüssig gekoppelt. Bei einer derartigen Anordnung, einer sogenannt doppelt geschlossenen Gelenkkette, bewirken schon kleine Fertigungsungenauigkeiten ein Klemmen in der Bewegung, was die Lager und Gelenke sehr stark beansprucht und zu einem hohen Verschleiss derselben führt. Die benötigten Genauigkeiten sind nur mit hohem Aufwand und entsprechenden Kosten zu erreichen.

Da mit der ersten, vom Motor angetriebenen Achse die zweite über die ganze Kette angetrieben wird, treten sehr hohe Kräfte und Momente auf; Ist die erste Achse schnell, ist die zweite gleichzeitig langsam. In dieser Phase der Bewegung bewegt sich das Oloid auf der Seite der zweiten, langsamen Achse quer zur Strömung und die Kraft die auf die zweite Achse wirkt ist relativ gering. Ist die erste Achse jedoch langsam, also in der umgekehrten Situation, wirken an der zweiten, schnellen Achse grosse Kräfte. Von der ersten Achse werden über die Gelenkkette die grosse Geschwindigkeit der zweiten Achse und hohe Momente übertragen. Das Zusammenwirken von hoher Geschwindigkeit und hohen Momenten führt zu sehr starken Belastungen der Gelenke, die bis zur Zerstörung derselben gehen können.

Die Verwendung zweier Antriebseinheiten 10 hat folgende Vorteile: Erstens sind die beiden Achsen 3, 4 neben der formschlüssigen Kopplung über die Gelenkkette 5, 6, 7, 8 nicht auch noch via Antrieb formschlüssig miteinander gekoppelt. Dadurch ergeben sich grössere Fertigungstoleranzen für die inversionskinematische Vorrichtung und den Antrieb, und beide werden mechanisch weniger belastet. Zweitens wirkt auf beide Achsen 3, 4 zu jeder Zeit das volle Drehmoment, welches durch die Antriebseinheiten 10 generiert wird. Dadurch dass beide Antriebseinheiten synchron laufen, wird ein einwandfreier Ablauf der inversionskinematischen Bewegung der Gelenkkette gewährleistet.

## Patentansprüche

1. Antrieb für mindestens eine inversionskinematische Vorrichtung (9), mit je einer dreigliedrigen Gelenkkette angetrieben über jeweils zwei parallele Achsen (3, 4), mit zwei im Wesentlichen gleichförmig drehenden Antriebseinheiten (10), **dadurch gekennzeichnet, dass** zwei gleichförmig drehende, von den Antriebseinheiten (10) getriebenen Antriebsachsen (11, 12) vorhanden sind, wobei die Antriebsachsen (11, 12) mittels Kreuzgelenken (13, 14) mit den Achsen (3, 4) verbunden sind,
wobei die Achsen (3, 4) mit den Antriebsachsen (11, 12) einen Beugungswinkel $\beta$ von im Wesentlichen 45° bilden, und somit die gleichförmige Bewegung der Antriebseinheiten (10) in die ungleichförmige Drehbewegung der Achsen (3, 4) umgewandelt wird.

2. Antrieb für mindestens eine inversionskinematische Vorrichtung (9) nach Patentanspruch 1, **dadurch gekennzeichnet, dass**
die Antriebsachsen (11, 12) und die Achsen (3, 4) in einer Ebene liegen.

3. Antrieb für mindestens eine inversionskinematische Vorrichtung (9) nach einem der Patentansprüche 1 bis 3, **dadurch gekennzeichnet, dass**
mehr als eine inversionskinematische Vorrichtung (9) von ihr angetrieben werden.

# Fig. 1a
**Stand der Technik**

# Fig. 1b
**Stand der Technik**

# Fig. 2
**Stand der Technik**

**Fig. 3**

**Fig. 4**

**Europäisches Patentamt**

**EUROPÄISCHER RECHERCHENBERICHT**

Nummer der Anmeldung

EP 06 40 5048

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 11 45 455 B (PAUL SCHATZ) 14. März 1963 (1963-03-14) * Spalte 3, Zeile 37 - Spalte 4, Zeile 4; Ansprüche 1,4 * ----- | 1-3 | INV. F16H21/46 ADD. B01F11/00 |
| A | WO 93/18850 A (BIOENGINEERING AG) 30. September 1993 (1993-09-30) * Zusammenfassung; Abbildung 1 * ----- | 1 | |

RECHERCHIERTE SACHGEBIETE (IPC)

F16H
B01F

Der vorliegende Recherchenbericht wurde für alle Patentansprüche erstellt

| Recherchenort | Abschlußdatum der Recherche | Prüfer |
|---|---|---|
| Den Haag | 23. Mai 2006 | Mende, H |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 40 5048

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-05-2006

| Im Recherchenbericht angeführtes Patentdokument | Datum der Veröffentlichung | Mitglied(er) der Patentfamilie | Datum der Veröffentlichung |
|---|---|---|---|
| DE 1145455 B | 14-03-1963 | CH 366710 A<br>GB 908563 A | 15-01-1963<br>17-10-1962 |
| WO 9318850 A | 30-09-1993 | AT 136230 T<br>DE 59302096 D1<br>EP 0584301 A1 | 15-04-1996<br>09-05-1996<br>02-03-1994 |

EPO FORM P0461

Für nähere Einzelheiten zu diesem Anhang : siehe Amtsblatt des Europäischen Patentamts, Nr.12/82